# EUROPEAN PATENT SPECIFICATION

(11) **EP 2 849 869 B1**
(45) Date of publication and mention of the grant of the patent: **29.06.2016**
(21) Application number: 12722134.9
(22) Date of filing: 15.05.2012
(51) Int. Cl.: B01D 39/16, B01D 46/00, B01D 46/54, F02C 7/05, B01D 39/20

(54) **MULTILAYER FILTER MEDIA**
MEHRSCHICHTIGE FILTERMEDIEN
MATÉRIAU FILTRANT MULTICOUCHE

(43) Date of publication of application: 25.03.2015
(73) Proprietor: Camfil AB, 111 34 Stockholm (SE)
(72) Inventor: LANS, Erik, S-619 33 Trosa (SE)
(74) Representative: Awapatent AB
(86) International application number: PCT/EP2012/059061
(87) International publication number: WO 2013/170890

(56) References cited:
- WO-A2-2011/022382
- US-A- 4 904 385
- US-A1- 2011 042 316

## Description

### FIELD OF THE INVENTION

The present invention relates to a filter media for removing particles from an air flow and to the use of such filter media in a gas turbine.

### BACKGROUND OF THE INVENTION

Gas turbines for e.g. power generation are normally protected by air filters provided in the air intake system. The purpose of these filters is to protect the engine from residue build-up, fouling, on the turbine blades in the compressor stage. This type of accumulation of unwanted material reduces efficiency and increases probability of failure of the gas turbine. Insufficient filter performance can also cause engine corrosion in the decompression stage (hot end corrosion). In the past, it was common to use filters in filter classes F7-F9 (EN779-2002) having a removal efficiency of almost 100% for particles above 3 µm but merely 50-75% for particles sized 0,4 µm and below. It has, however, been revealed that particles having a size below 0,4 µm have a significant impact on both fouling and hot end corrosion and this has lead to an increased demand for filters in higher filter classes. Today, the use of filters of filter class EPA11, removal efficiency of 95% on Most Penetrating Particle Size (MPPS) or even EPA12, removal efficiency of 99,5% on MPPS, is not unusual. A problem with these highly efficient filters is that they have a considerably higher pressure drop. In new installations, this could be compensated for by using a larger filter area to reduce the air flow per area unit. In existing gas turbines, this is not always possible, or at least not feasible for cost reasons and the use of more efficient filters is therefore prevented. New materials allow the combination of high filter efficiency and low pressure drop. Examples of materials are porous membranes of expanded polytetrafluoethylene (ePTFE), ultra high molecular weight polyethylene (UPE) or membranes of electro spun polymer fibers. These types of membranes have in common that they are very thin and have a low fiber density with fine fibers, thus generating large fiber surface area which is a key parameter in achieving high filtration efficiency while not restricting the air flow. These thin membranes are, however, sensitive to damage. Another problem is that the passage of air will be restricted due to agglomeration of particles on the upstream surface of the membrane. The membrane typically has an active filtration thickness between 0,01 mm and 0,1 mm while standard filters made of cellulose or synthetic fibers have a thickness of 0,3-1 mm. The greater depth of the standard filters leads to particle capture within a greater volume such that flow restriction due to particle agglomeration takes longer time to build up. This can be solved by laminating a pre-filter layer on an upstream surface of the membrane that captures a majority of the larger particles (>3µm) thus reducing the particle agglomeration on the membrane. EP-1674144B1 discloses a system comprising a gas turbine and a filter having a filter media with a porous polymeric membrane and a depth filtration layer comprising electrostatically charged polymeric fibers. The electrostatic charging of the depth filtration layer is done to enhance filter performance. This solution has a number of disadvantages, the most noticeable being the fact that the electrostatic charge of the depth filtration layer is only temporary so that filter efficiency will diminish with over time.

The documents US 4 904 385 A, WO 2011/022382 A2 and US 2011/042316 A1 describe a filter media comprising a blend of wet laid glass fibers and polymeric fibers adjacent to a membrane.

### SUMMARY OF THE INVENTION

It is an object of the present invention to provide an improved filter media which eliminates, or at least reduces the above mentioned and other drawbacks. This object and other objects are achieved by a filter media according to the present invention as defined in claim 1 of the appended claims. This object and other objects are also achieved by a use as defined in claim 15 of the appended claims. Preferred embodiments of the present invention are defined in the dependent claims.

Thus, in accordance with an aspect of the present invention there is provided a multilayer filter media for removing particles from an air stream, comprising a porous membrane layer and a pre-filter layer having a downstream surface and an upstream surface. The pre-filter layer is arranged with the downstream surface adjacent an upstream side of the porous membrane layer. The pre-filter layer comprises a wet laid composite media having a mixture of glass fibers and synthetic fibers. This configuration brings a number of advantages with it such as high structural stability and good characteristics in wet environments. The wet laying process used to produce the pre-filter layer prevents the build-up of any electrostatic charge in the pre-filter media, i.e. the pre-filter media is inherently electrostatically uncharged, such that the filtration efficiency will not be reduced due to loss of electrostatic charge over time.

In accordance with an embodiment of the filter media of the invention, the porous membrane layer is laminated to the pre-filter layer. Laminating the two layers provides a reliable interconnection of the layers.

In accordance with an embodiment of the filter media of the invention, a supporting layer is laminated to a downstream side of the porous membrane layer. Such supporting layer will provide further structural stability and can comprise a wet-laid layer of cellulose, synthetic or glass fibers or combinations thereof. Spun bound, air laid or woven materials are also conceivable. If fibers are used in the support layer that may damage the membrane, e.g. glass fibers, it is possible to use an additional, intermediate layer as well to protect the membrane.

In accordance with an embodiment of the filter media of the invention, a majority of the fibers at the downstream surface of the pre-filter layer are synthetic fibers. This has the advantage that the membrane is protected from being punctured by the often sharp glass fibers.

In accordance with an embodiment of the filter media of the invention, a ratio of an amount of synthetic fibers in a given plane parallel to said downstream surface to a total amount of fibers in said plane decreases from the downstream surface of the pre-filter layer towards a centre of said pre-filter layer. This results in a pre-filter layer that protects the membrane from the glass fibers and also protects the often brittle glass fibers from damage during handling of the pre-filter media.

In accordance with an embodiment of the filter media of the invention, a ratio of the amount of synthetic fibers at the downstream surface of the pre-filter layer to the total amount of fibers at the downstream surface of the pre-filter layer is larger than 0,7.

In accordance with an embodiment of the filter media of the invention, a ratio of the amount of synthetic fibers at the upstream surface of the pre-filter layer to the total amount of fibers at the upstream surface of the pre-filter layer is larger than 0,5. By providing an outer layer having a majority of synthetic fibers it will have enhanced surface scratch resistance and the glass fibers are protected from damage during handling of the pre-filter media.

In accordance with an embodiment of the filter media of the invention, in a plane parallel to said downstream surface centrally positioned between the downstream surface and the upstream surface of the pre-filter layer, the ratio of the amount of synthetic fibers to the total amount of fibers is less than 0,5 and a ratio of the amount of glass fibers to the total amount of fibers is larger than 0,5. At the centre of the pre-filter media the glass fibers are protected from damage and can provide excellent mechanical filtration performance.

In accordance with an embodiment of the filter media of the invention, the glass fibers of the pre-filter layer have diameters from 0,01 µm and 50 µm, preferably between 0,1 µm and 0,5 µm.

In accordance with an embodiment of the filter media of the invention, the synthetic fibers of the pre-filter layer have diameters from 0,01 µm and 50 µm, preferably between 0,5 µm and 50 µm.

In accordance with an embodiment of the filter media of the invention, the pre-filter layer is not electrostatically charged. Electrostatically charged filter media typically have very good initial filtration characteristics. However, these characteristics diminish as the electrostatic charge reduces over time. By providing a pre-filter media which is not electrostatically charged, a pre-filter media is obtained that has more consistent filtration properties over its complete lifetime. It is also possible to add a discharge step during the manufacture of the pre-filter layer and/or during the manufacture of the multilayer filter media. This further enhances the consistent characteristics of the filter according to the present invention.

In accordance with an embodiment of the filter media of the invention, the porous membrane layer comprises an ePTFE-membrane. ePTFE has been used for a long time and has proved to comprise the necessary characteristics, e.g. strength against the formation of holes when the filter media is pleated; air permeability; particle filtration efficiency and; handling characteristics.

In accordance with an embodiment of the filter media of the invention, the porous membrane layer comprises an Ultra High Molecular Weight Polyethylene-membrane (UPE). UPE has been shown to constitute an adequate alternative to ePTFE.

In accordance with an embodiment of the filter media of the invention, the porous membrane layer comprises a membrane of spun bound polymer fibers. A membrane made from spun bound polymer fibers has also been shown to constitute an adequate alternative to ePTFE.

In accordance with another aspect of the invention, the use of a multilayer filter media according to any of claims 1 to 14 for removing particles from an air stream in a gas turbine air intake system is described.

Further objects and advantages of the present invention will be discussed below by means of exemplifying embodiments. These and other features, aspects and advantages of the invention will be more fully understood when considered with respect to the following detailed description, appended claims and accompanying drawings.

### BRIEF DESCRIPTION OF THE DRAWINGS

The invention will now be described in more detail and with reference to the appended drawings in which:
Fig. 1 is a schematic cross-section of a first embodiment of the filter media according to the invention.
Fig. 2 is a schematic cross-section of a second embodiment of the filter media according to the invention.
Fig. 3 is a schematic cross-section of a third embodiment of the filter media according to the invention.
Fig. 4 is a schematic presentation of the fiber content distribution of a filter media according to the first embodiment of the invention

### DESCRIPTION OF PREFERRED EMBODIMENTS

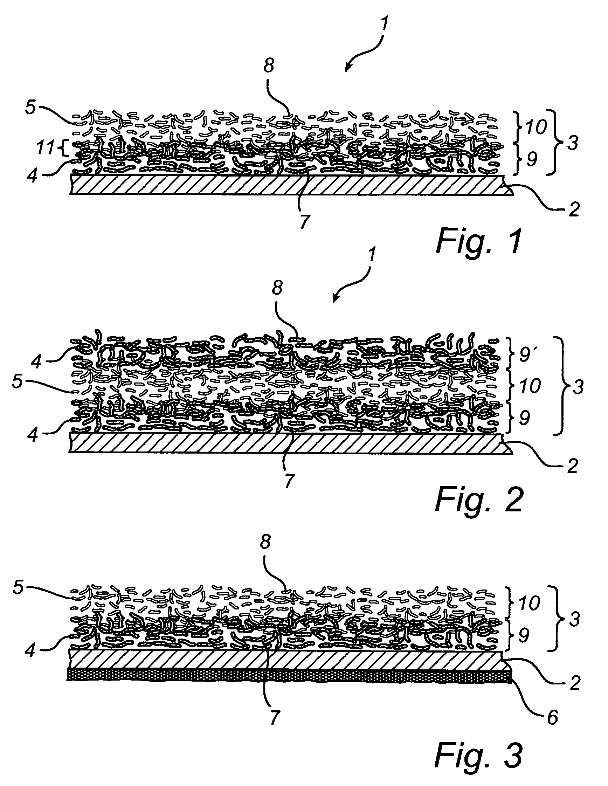

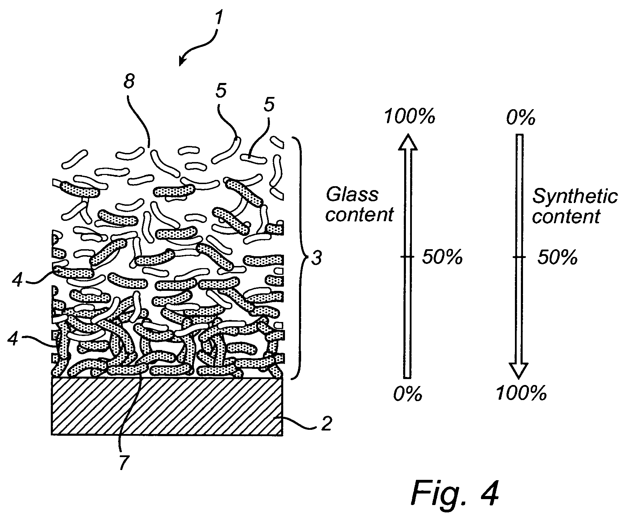

In a first embodiment of a filter media according to the invention, as shown in figure 1, a filter media 1 comprises a porous membrane layer 2. The membrane layer 2 could comprise an ePTFE-membrane or an UPE-membrane or an electro spun membrane made of fibers from a variety of polymers. The membrane 2 is laminated to a pre-filter media 3. This pre-filter media 3 is intended to protect the membrane 2 from mechanical damage and prevent larger particles from reaching the upstream surface of the membrane, thus preventing or at least reducing clogging of the membrane 2. The pre-filter layer comprises a downstream surface 7 with which the pre-filter layer 2 is laminated to an upstream surface of the membrane 2. The pre-filter layer 2 comprises two types of fibers divided in two somewhat overlapping layers 9 and 10. The upstream layer 10 comprises a majority of glass fibers 5 and the downstream layer 9 comprises a majority of synthetic fibers 4. It should be noted that these layers are not divided by a well defined boundary, instead they overlap each other to a certain extent. This is due to the fact that the pre-filter layer is manufactured in a wet laying process so that fibers of an overhead layer will reach into an underlying layer. This manufacturing process can also be used to create a pre-filter media where the distribution of the fibers varies linearly from one point in the pre-filter media to another. For example, it would be possible to create a filter media as described in figure 4 where, at the downstream surface 7, the content of synthetic fibers 4 constitute 100% of the total amount of fibers at the downstream surface and where the content of synthetic fibers 4 decline linearly towards the upstream surface 8 of the pre-filter 3 where the synthetic fibers 4 constitute 0% of the total amount of fibers at the upstream surface 8. The amount of glass fibers 5 follows a reverse linear distribution, i.e. 0% at the downstream 7 surface and 100% at the upstream surface 8 of the pre-filter 3. This is a theoretical build-up, but one that could very well be realized with the wet laying process. The embodiment disclosed in figure 1 has a somewhat more distinct border between an upstream layer 10 comprising a majority of glass fibers 5 in a downstream layer 9 comprising a majority of synthetic fibers 4. But a certain mixing of glass fibers 5 and synthetic fibers 4 will occur in the mixing zone 11. One possible structure is shown in figure 2 where a membrane 2 is laminated to a downstream surface 7 of pre-filter layer 3. The pre-filter layer 3 comprises a lower layer of synthetic fibers 9 and an upper layer of synthetic fibers 9' as well as an intermediate layer 10 of glass fibers interposed there between. The provision of two layers 9, 10 of synthetic fibers creates a pre-filter layer which prevents damages to the membrane by the sharp glass fibers 5 of layer 10 while protecting said glass fibers 5 from damage during e.g. handling of the filter media 1. The synthetic fibers 4 provides good structural behavior, also in wet conditions and provides for good particle retention while the interposed layer 10 of glass fibers ensures good mechanical filtration properties without having to rely on electrostatic charge of the fibers.

Figure 3 shows a filter media which corresponds to that of figure 1 where a supporting layer 6 has been provided at a downstream surface of the membrane 2. This supporting layer 6 provides for additional structural stability to the filter media 1 and serves to protect the downstream surface of the membrane 2 from damage, e.g. during pleating or during mounting of the pleated filter media 1 in a frame or similar. The supporting layer 6 can comprise a number of different materials such as a wet-laid layer of cellulose, synthetic or glass fibers or combinations thereof. Spun bound, air laid or woven materials are also conceivable. The thickness of such support layer 6 ranges between 0,1-10 mm, typically between 0,1-2 mm. Additionally, if fibers are used in the support layer that may damage the membrane, e.g. glass fibers, it is possible to use an intermediate layer made of e.g. fabric as well to protect the membrane (not shown in the figures). Of course, the use of a support layer 6 could be realized in combination with any type of pre-filter layer mentioned herein, such as the ones described in figures 2 and 4.

Finally, it is realized that the use of a pre-filter layer having a combination of glass fibers and synthetic fibers uses the advantages of both fiber types. Consequently, the synthetic fibers provide good particle retention properties and good structural stability, also in moist environments, to the filter and prevent collapsing of e.g. a pleated filter media. A collapse can sometimes occur when using filters with only, or a very high share of, fine fibers such as glass fibers in moist environments. A collapse of this type will give a permanent deformation of the filter media causing adjacent pleats to come in contact with each other thereby reducing air flow and increasing pressure drop over the filter. On the other hand, glass fibers have better particle separating properties than synthetic fibers. The structure of the pre-filter according to the present invention creates a 3-dimensional, heterogeneous structure that disperses the collected particles over the entire depth of the pre-filter so that the increase in pressure drop over time is reduced. Furthermore, it has been shown that this pre-filter layer has advantages over the prior art when it comes to filtration characteristics when used in environments where it is exposed to high salt contents, e.g. off-shore gas turbines. In this type of environment the filters are exposed to an aerosol comprising salt particles suspended in air. The salt particles are absorbed and retained by the fibers of the pre-filter layer. Also salt particles dissolved in water droplets in the air will deposit on the fibers of the pre-filter media and when the water eventually evaporates the salt particles will remain on the surface of the fibers of the pre-filter layer. The salt particles will shrink and expand with varying air humidity. Below approximately 40% relative humidity, the salt particles will not shrink further but with increasing humidity, the salt particles will expand up to 5-10 times compared to its dry size. Variations in air humidity will therefore cause the pressure drop over the filter to vary greatly. Laboratory tests have been performed where the pre-filter media of the present invention has been subjected to salt and a following cycle of moistening and drying and where the pressure drop over the filter has been monitored. These tests have shown that the pressure drop after a subsequent cycle of moistening and drying will actually be lower than before the moistening. A filter media according to the present invention therefore combines the best of these fiber types and relies on mechanical filtration rather than electrostatic filtration. This provides consistent filtration characteristics in comparison with filter media relying on electrostatically charged fibers. It provides a filter that is strong, tear resistant, long working life, good humidity characteristics and with excellent characteristics in salt environments. It combines low pressure drop with high filtering efficiency and enables lamination to the membrane without damaging it.

## Claims

1. Multilayer filter media (1) for removing particles from an air stream, said filter media (1) comprising a porous membrane layer (2) and a pre-filter layer (3) having a downstream surface (7) and an upstream surface (8), wherein said pre-filter layer (3) is arranged with said downstream (7) surface adjacent an upstream side of the porous membrane layer (2) and wherein said pre-filter layer (3) comprises a wet laid composite media having a mixture of glassfibers (5) and synthetic fibers (4 ), wherein a ratio of an amount of synthetic fibers (4) to a total amount of fibers varies over the thickness of the pre-filter layer.

2. Multilayer filter media (1) according to claim 1, wherein the porous membrane layer (2) is laminated to the pre-filter layer (3).

3. Multilayer filter media (1) according to claim 1, wherein a supporting layer (6) is laminated to a downstream side of the porous membrane layer (2).

4. Multilayer filter media (1) according to claim 1, wherein a majority of the fibers at the downstream surface (7) of the pre-filter layer are synthetic fibers (4).

5. Multilayer filter media (1) according to claim 1, wherein a ratio of an amount of synthetic fibers (4) in a given plane parallel to said downstream surface (7) to a total amount of fibers in said plane decreases from the downstream surface (7) of the pre-filter layer (3) towards a centre of said pre-filter layer (3).

6. Multilayer filter media (1) according to claim 1, wherein a ratio of the amount of synthetic fibers (4) at the downstream surface (7) of the pre-filter layer (3) to the total amount of fibers at the downstream surface (7) of the pre-filter layer (3) is larger than 0,7.

7. Multilayer filter media (1) according to claim 1, wherein a ratio of the amount of synthetic fibers (4) at the upstream surface (8) of the pre-filter layer (3) to the total amount of fibers at the upstream surface (8) of the pre-filter layer (3) is larger than 0,5.

8. Multilayer filter media (1) according to claim 5, wherein, in a plane parallel to said downstream surface (7) centrally positioned between the downstream surface (7) and the upstream surface (8) of the pre-filter layer (3), the ratio of the amount of synthetic fibers (4) to the total amount of fibers is less than 0,5 and a ratio of the amount of glass fibers (5) to the total amount of fibers is larger than 0,5.

9. Multilayer filter media (1) according to claim 1, wherein the glass fibers (5) of the pre-filter layer (3) have diameters between 0,01 µm and 50 µm, preferably between 0,1 µm and 0,5 µm.

10. Multilayer filter media (1) according to claim 1, wherein the synthetic fibers (4) of the pre-filter layer (3) have diameters between 0,01 µm and 50 µm, preferably between 0,5 µm and 50 µm.

11. Multilayer filter media (1) according to claim 1, wherein the pre-filter layer (3) is not electrostatically charged.

12. Multilayer filter media (1) according to claim 1, wherein the porous membrane layer (2) comprises an ePTFE-membrane.

13. Multilayer filter media (1) according to claim 1, wherein the porous membrane layer (2) comprises an Ultra High Molecular Weight Polyethylene-membrane.

14. Multilayer filter media (1) according to claim 1, wherein the porous membrane layer (2) comprises a membrane of spun bound polymer fibers.

15. Use of the a multilayer filter media (1) according to any of claims 1 to 14 for removing particles from an air stream in a gas turbine air intake system.

## Patentansprüche

1. Mehrschichtiges Filtermedium (1) zum Entfernen von Partikeln aus einem Luftstrom, wobei das Filtermedium (1) eine poröse Membranschicht (2) und eine Vorfilterschicht (3) umfasst, welche eine stromabwärtsseitige Fläche (7) und eine stromaufwärtsseitige Fläche (8) aufweist, wobei die Vorfilterschicht (3) mit der stromabwärtsseitigen Fläche (7) neben einer stromaufwärts gelegenen Seite der porösen Membranschicht (2) angeordnet ist, und wobei die Vorfilterschicht (3) ein benetztes Verbundmedium umfasst, welches eine Mischung aus Glasfasern (5) und synthetischen Fasern (4) aufweist, wobei ein Mengenverhältnis von synthetischen Fasern (4) zu einer Gesamtmenge an Fasern über die Dicke der Vorfilterschicht variiert.

2. Mehrschichtiges Filtermedium (1) nach Anspruch 1, wobei die poröse Membranschicht (2) auf die Vorfilterschicht (3) laminiert ist.

3. Mehrschichtiges Filtermedium (1) nach Anspruch 1, wobei eine Trägerschicht (6) auf eine stromabwärts gelegene Seite der porösen Membranschicht (2) laminiert ist.

4. Mehrschichtiges Filtermedium (1) nach Anspruch 1, wobei eine Mehrzahl der Fasern auf der stromabwärtsseitigen Fläche (7) der Vorfilterschicht synthetische Fasern (4) sind.

5. Mehrschichtiges Filtermedium (1) nach Anspruch 1, wobei ein Mengenverhältnis von synthetischen Fasern (4) in einer vorgegebenen Ebene parallel zu der stromabwärtsseitigen Fläche (7) zu einer Gesamtmenge an Fasern in der Ebene von der stromabwärtsseitigen Fläche (7) der Vorfilterschicht (3) zu einer Mitte der Vorfilterschicht (3) hin abnimmt.

6. Mehrschichtiges Filtermedium (1) nach Anspruch 1, wobei ein Mengenverhältnis von synthetischen Fasern (4) an der stromabwärtsseitigen Fläche (7) der Vorfilterschicht (3) zu der Gesamtmenge an Fasern an der stromabwärtsseitigen Fläche (7) der Vorfilterschicht (3) größer als 0,7 ist.

7. Mehrschichtiges Filtermedium (1) nach Anspruch 1, wobei ein Mengenverhältnis von synthetischen Fasern (4) an der stromaufwärtsseitigen Fläche (8) der Vorfilterschicht (3) zu der Gesamtmenge an Fasern an der stromaufwärtsseitigen Fläche (8) der Vorfilterschicht (3) größer als 0,5 ist.

8. Mehrschichtiges Filtermedium (1) nach Anspruch 5, wobei in einer Ebene parallel zu der stromabwärtsseitigen Fläche (7), zentral gelegen zwischen der stromabwärtsseitigen Fläche (7) und der stromaufwärtsseitigen Fläche (8) der Vorfilterschicht (3), das Mengenverhältnis von synthetischen Fasern (4) zu der Gesamtmenge an Fasern geringer als 0,5 ist und ein Mengenverhältnis an Glasfasern (5) zu der Gesamtmenge an Fasern größer als 0,5 ist.

9. Mehrschichtiges Filtermedium (1) nach Anspruch 1, wobei die Glasfasern (5) der Vorfilterschicht (3) Durchmesser zwischen 0,01 µm und 50 µm, vorzugsweise zwischen 0,1 µm und 0,5 µm, aufweisen.

10. Mehrschichtiges Filtermedium (1) nach Anspruch 1, wobei die synthetischen Fasern (4) der Vorfilterschicht (3) Durchmesser zwischen 0,01 µm und 50 µm, vorzugsweise zwischen 0,5 µm und 50 µm, aufweisen.

11. Mehrschichtiges Filtermedium (1) nach Anspruch 1, wobei die Vorfilterschicht (3) elektrostatisch nicht geladen ist.

12. Mehrschichtiges Filtermedium (1) nach Anspruch 1, wobei die poröse Membranschicht (2) eine ePTFE- Membran umfasst.

13. Mehrschichtiges Filtermedium (1) nach Anspruch 1, wobei die poröse Membranschicht (3) eine Polyethylen-Membran mit ultrahohem Molekulargewicht umfasst.

14. Mehrschichtiges Filtermedium (1) nach Anspruch 1, wobei die poröse Membranschicht (2) eine Membran aus Spinnvlies-Polymerfasern umfasst.

15. Verwendung eines mehrschichtigen Filtermediums (1) nach einem der Ansprüche 1 bis 14 zum Entfernen von Partikeln aus einem Luftstrom in einem Gasturbinen-Lufteinlasssystem.

## Revendications

1. Matériau filtrant multicouche (1) pour l'élimination des particules d'un flux d'air, ledit matériau filtrant (1) comprenant une couche membranaire poreuse (2) et une couche de préfiltration (3) présentant une surface aval (7) et une surface amont (8), ladite couche de préfiltration (3) étant disposée avec ladite surface aval (7) contiguë à un côté amont de la couche membranaire poreuse (2), et ladite couche de préfiltration (3) comprenant un matériau composite non tissé obtenu par voie humide constitué d'un mélange de fibres de verre (5) et de fibres synthétiques (4), le rapport entre la quantité de fibres synthétiques (4) et la quantité totale de fibres variant sur l'épaisseur de la couche de préfiltration.

2. Matériau filtrant multicouche (1) selon la revendication 1, dans lequel la couche membranaire poreuse (2) est stratifiée sur la couche de préfiltration (3).

3. Matériau filtrant multicouche (1) selon la revendication 1, dans lequel une couche de support (6) est stratifiée sur un côté aval de la couche membranaire poreuse (2).

4. Matériau filtrant multicouche (1) selon la revendication 1, dans lequel la majeure partie des fibres de la surface aval (7) de la couche de préfiltration sont des fibres synthétiques (4).

5. Matériau filtrant multicouche (1) selon la revendication 1, dans lequel le rapport entre la quantité de fibres synthétiques (4) d'un certain plan parallèle à ladite surface aval (7) et la quantité totale de fibres dudit plan va décroissant entre la surface aval (7) de la couche de préfiltration (3) et le centre de ladite couche de préfiltration (3).

6. Matériau filtrant multicouche (1) selon la revendication 1, dans lequel le rapport entre la quantité de fibres synthétiques (4) de la surface aval (7) de la couche de préfiltration (3) et la quantité totale de fibres de la surface aval (7) de la couche de préfiltration (3) est supérieur à 0,7.

7. Matériau filtrant multicouche (1) selon la revendication 1, dans lequel le rapport entre la quantité de fibres synthétiques (4) de la surface amont (8) de la couche de préfiltration (3) et la quantité totale de fibres de la surface amont (8) de la couche de préfiltration (3) est supérieur à 0,5.

8. Matériau filtrant multicouche (1) selon la revendication 5, dans lequel, dans un plan parallèle à ladite surface aval (7), situé de manière centrale entre la surface aval (7) et la surface amont (8) de la couche de préfiltration (3), le rapport entre la quantité de fibres synthétiques (4) et la quantité totale de fibres est inférieur à 0,5 et le rapport entre la quantité de fibres de verre (5) et la quantité totale de fibres est supérieur à 0,5.

9. Matériau filtrant multicouche (1) selon la revendication 1, dans lequel les fibres de verre (5) de la couche de préfiltration (3) présentent des diamètres situés entre 0,01 µm et 50 µm, de préférence entre 0,1 µm et 0,5 µm.

10. Matériau filtrant multicouche (1) selon la revendication 1, dans lequel les fibres synthétiques (4) de la couche de préfiltration (3) présentent des diamètres situés entre 0,01 µm et 50 µm, de préférence entre 0,5 µm et 50 µm.

11. Matériau filtrant multicouche (1) selon la revendication 1, dans lequel la couche de préfiltration (3) est exempte de charge électrostatique.

12. Matériau filtrant multicouche (1) selon la revendication 1, dans lequel la couche membranaire poreuse (2) comprend une membrane en ePTFE.

13. Matériau filtrant multicouche (1) selon la revendication 1, dans lequel la couche membranaire poreuse (2) comprend une membrane en polyéthylène de poids moléculaire ultra-élevé.

14. Matériau filtrant multicouche (1) selon la revendication 1, dans lequel la couche membranaire poreuse (2) comprend une membrane de fibres polymères spunbound.

15. Utilisation d'un matériau filtrant multicouche (1) selon l'une quelconque des revendications 1 à 14 pour l'élimination des particules d'un flux d'air présent dans le système d'admission d'air d'une turbine à gaz.
